# EUROPEAN PATENT SPECIFICATION

(11) **EP 2 942 925 B1**
(45) Date of publication and mention of the grant of the patent: **24.08.2016**
(21) Application number: 14195313.3
(22) Date of filing: 28.11.2014
(51) Int. Cl.: H04L 29/08, H04L 29/06

(54) **A method and system for providing a private network**
Verfahren und System zur Bereitstellung eines privaten Netzwerks
Procédé et système pour fournir un réseau privé

(30) Priority: 05.05.2014 EP 14167080
(43) Date of publication of application: 11.11.2015
(73) Proprietor: Advanced Digital Broadcast S.A., 1292 Chambesy (CH)
(72) Inventor: Miasojed, Sebastian, 65-119 Zielona Gora (PL); Pajak, Michal, 65-119 Zielona Gora (PL)
(74) Representative: Eupatent.pl

(56) References cited:
- US-A1- 2004 015 725
- US-A1- 2012 179 787
- US-B1- 8 082 583

## Description

### TECHNICAL FIELD

The present invention relates to a method and system for providing a private network.

### BACKGROUND

There are numerous hazards associated with access to Internet content. Some Internet sites may provide content that is not appropriate for a particular user, e.g. adult content. Other Internet sites may provide content that contains malicious code which may lead to loss of data from user's terminal.

Various attempts are performed to allow the user to operate in a safe environment, wherein the dangerous Internet sites are eliminated. These attempts typically involve installation of firewall software at the user terminal or at a proxy server via which the user terminal communicates with the Internet.

A US patent application presents an apparatus and method for client-side content processing such as filtering and caching of secure content sent using Transport Layer Security (TLS) or Secure Socket Layer (SSL) protocols, in accordance with the preamble of claim 1.

It would be advantageous to provide a new, alternative method and system to provide a private computer network in the Internet, e.g. a network where at least part of non-desired content is eliminated and where content considered as secure can be easily accessed.

### SUMMARY

The object of the present invention is a system for providing a private network to a user terminal, the system comprising: the user terminal configured to request content from secure sources compliant with secure content certificates and from a proxy server; wherein the proxy server is configured to: communicate with the user terminal via a secure channel; receive from the user terminal a request to access content from an external content server; retrieve the requested content from the external content server; verify the compliance of the requested content with predefined content compliance rules; and provide the requested content to the user terminal if the content is compliant with the predefined content compliance rules. The user terminal further comprises content type access rules defining the types of content which can be accessed directly without the use of the proxy server
Another object of the present invention is a method for providing a private network to a user terminal, comprising the steps of: configuring the user terminal to request content from secure sources compliant with secure content certificates and a from proxy server; providing a secure channel for communication between the user terminal and the proxy server; at the proxy server : receiving from the user terminal a request to access content at an external content server; retrieving the requested content from the external content server; verifying the compliance of the requested content with predefined content compliance rules; and providing the requested content to the user terminal if the content is compliant with the predefined content compliance rules. The user terminal further comprises content type access rules defining the types of content which can be accessed directly without the use of the proxy server and the method further comprises configuring the user terminal to request the content of the types defined by the content type access rules directly without the use of the proxy server.

Preferably, at least some of the compliance rules are user-terminal specific or user-specific.

Preferably, the system further comprises an internal secured content server which is accessible by the user terminal via a secure channel and which is configured to provide a list of services to the user terminal.

Preferably, the user terminal comprises secure content certificates for accessing external allowed content servers directly without the use of the proxy server.

The invention also relates to a computer program comprising program code means for performing all the steps of the above-described method when said program is run on a computer and to a computer readable medium storing computer-executable instructions performing all the steps of the method described above when executed on a computer.

The presented method and system provide access to a selected set of internet sites in a form of controlled and secure walled garden environment, by accessing a reversed proxy solution located in a cloud through an SSL tunnel. This virtually isolates a user device from the Internet (the Internet does not see the user device, but the user device does see Internet filtered pages), thus securing the user device.

### BRIEF DESCRIPTION OF DRAWINGS

The present invention is shown by means of exemplary embodiments on a drawing, in which:
Fig. 1 shows a structure of the system;
Fig. 2 shows a diagram of communication between the user terminal, the proxy server and the Internet network;
Fig. 3 shows a method for initiating communication between the user terminal and the proxy server;
Fig. 4 shows a method for accessing a web page in the system.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

### DESCRIPTION OF EXAMPLE EMBODIMENTS

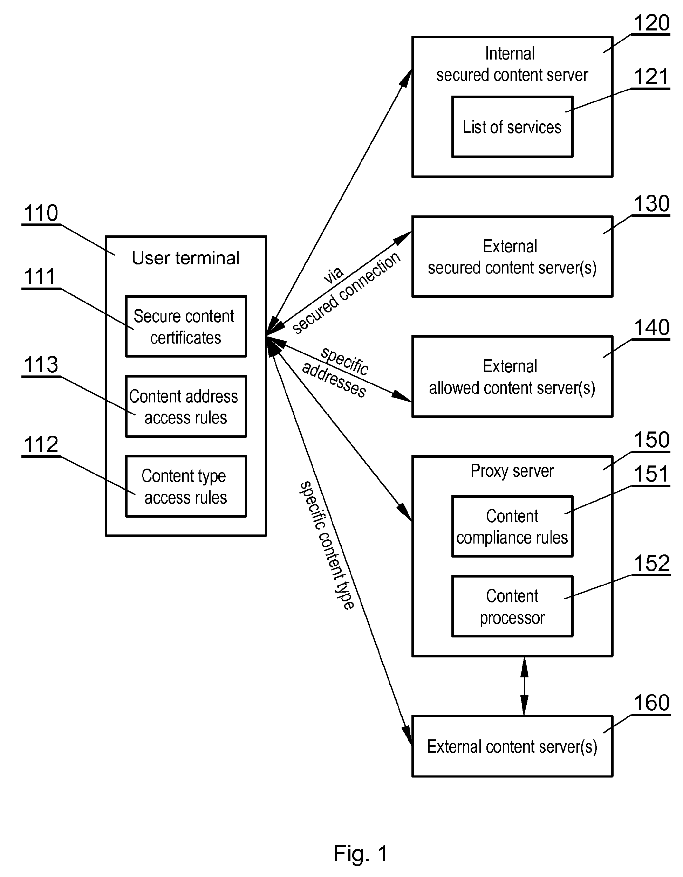

The presented system, as shown in Fig. 1, comprises a user terminal 110 for which a private network is created. The user terminal can be e.g. a set-top box operating in a digital television or a hybrid network. It can be also any other user terminal, such as a telephone operating in a cellular telephony network or general purpose computer operating in a computer network. The user terminal comprises a database (e.g. in form of a list) of secure content certificates. The certificates may be e.g. SSL certificates which guarantee that the web site associated with the certificate is a secure site. For example, the certificate may be used to establish a connection via a HTTPS protocol (Hypertext Transfer Protocol Secure). Furthermore, the user terminal may comprise a database (e.g. a list) of content address access rules 113, which defines which addresses of servers 140 are secure to be accessed. Furthermore, the user terminal may comprise a database (e.g. a list) of content type access rules 112, which defined which content types are secure to be accessed from any servers, including the external content servers 160 which are normally accessible via the proxy server 150 only. For example, the content type access rules 112 may define that it is safe to access audio-type or video-type streaming content. Moreover, the rules 112 and 113 may define jointly both content type and server identifier at which the content is stored.

For example, the content type access rules 112 may define the type of content by:
- a descriptive parameter, such as "text files", "audio files", "video files"
- file format descriptor, such as "txt", "pdf", "xml", "RMVB", "AVI", "MP3"

The internal secured content server 120 is accessible by the user terminal 110 via a secure connection, e.g. a HTTPS connection using an SSL certificate stored in the database 111 at the user terminal 110. The internal secured content server 120 comprises a list of services which can be securely accessed by the user terminal 120, for example a list of trusted web sites. The user terminal is configured to allow access to the trusted services defined by the database 121

Other external secured content servers 130 can be accessed by the user terminal 110 if an appropriate certificate for such server is stored at the database 111 of the user terminal 110.

A proxy server 150 is used to provide the private network to the user terminal 110 by allowing the terminal 110 to access selected content from external content servers 160. The proxy server 150 and the user terminal 110 communicate via a secure channel, such as a secured tunnel. The content delivered from the proxy server 150 to the user terminal 110 is considered to be secure. When a user terminal wishes to access content that is not accessible via a secure channel for which the user terminal has a certificate, the user terminal communicates the request to access that content (e.g. a web page) to the proxy server 150. The proxy server retrieves the requested content from the external content server (160) and verifies the compliance of the requested content with predefined content compliance rules 151. At least some of the compliance rules 151 may be user-specific, e.g. each terminal 110 or each user of the system may have its own content type or address access rules. The content compliance rules may check e.g. whether the content has allowable subject matter (e.g. content which is not adult-related) or whether the content does not comprise malicious software. If the requested content is compliant with the predefined content compliance rules 151, the requested content is provided to the user terminal 110. This way, the user terminal 110 is isolated from the non-trusted content of the external network and receives only content approved by the proxy server 150.

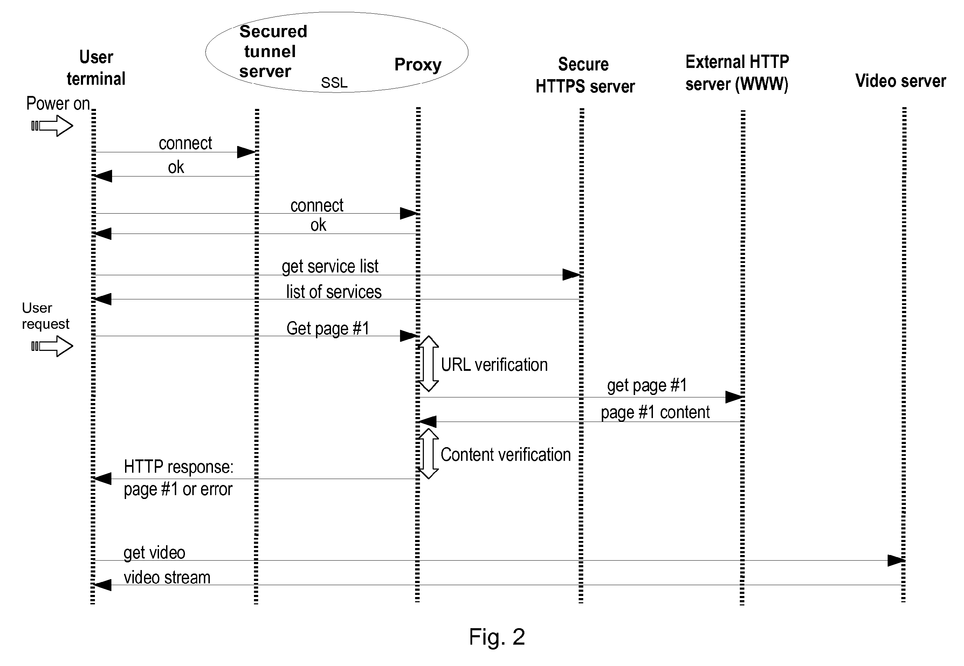

An example of operation of the system is presented in Fig. 2. After the user terminal is powered on, it checks whether the secured tunnel is accessible and next it connects to the proxy server to check whether the proxy server is accessible. If so, the user terminal may ask for a list of services (e.g. web sites) which are trusted, from the secure internal HTTPS server 120 (i.e. a server internal to the system, i.e. a server operated by the system operator). The list of services is provided to the user. In case a user wishes to access content (e.g. video content) which is defined as secure by the database of content type access rules 112, the server (which can be the server 120, 130, 140, 160) of that content is communicated directly and content is provided directly from that server. In case when the user terminal requests a non-secure content (e.g. a link to an external web page that is present in content previously considered as secure, e.g. a link to an external web page attached to in a video file), that non-secure content can be obtained via the secured tunnel through the proxy server as described above.

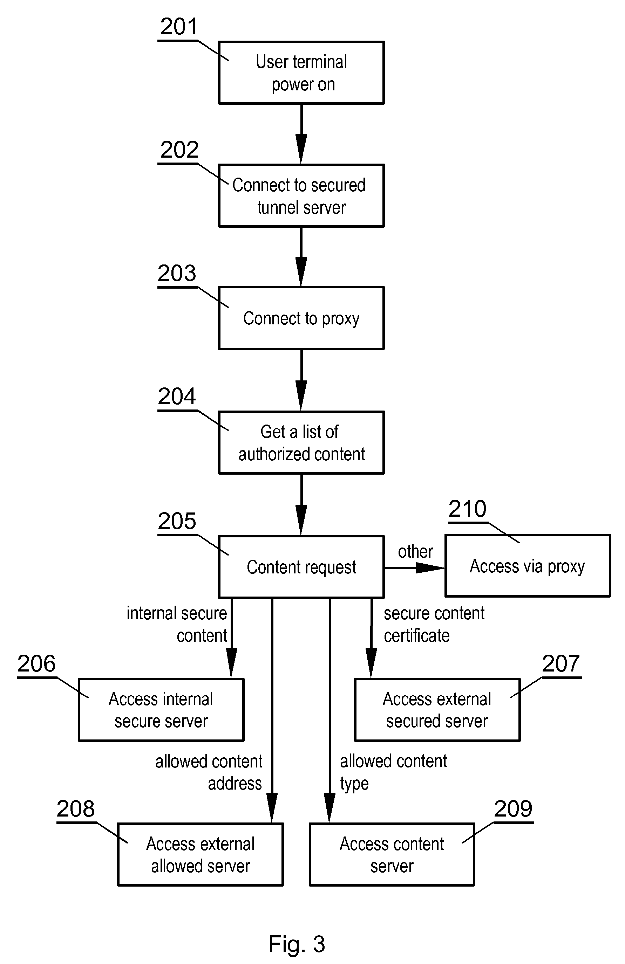

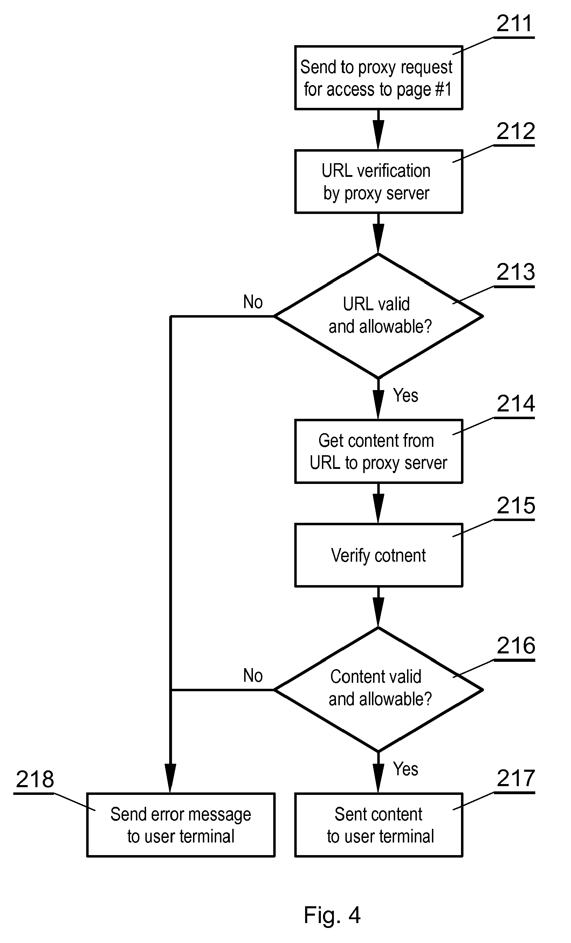

The procedure of initiating the user terminal is shown in Fig. 3. After the user terminal 110 is powered on in step 201, it attempts in step 202 to connect to the secured tunnel with the proxy server 150. If the secured tunnel is available, the connection is established in step 203 and the user terminal obtains the list of authorized content from the internal secure server 120 in step 204. When in subsequent step 205 content is requested, it is checked what is the requested content and:
- if the content is from the internal secure server 120, the content can be accessed directly by communicating with the internal secure server is step 206;
- if the content is from an external secured content server 130 compliant with a secure content certificate 111, the content can be accessed directly by communicating with the external secured content server 130 in step 207;
- if the content is from an external allowed content server 140, the address of which is in the database of content address access rules 113, the content can be accessed directly by communicating with the external allowed content server 140 in step 208;
- if the content is of a type specified by the database of content type access rules 112, the content can be accessed directly by communicating with the server 120, 130, 140 or 160 in step 209;
- in all other cases, i.e. when the content parameters suggest that the content is not secure, the content is accessed via the proxy server 150, according to the procedure shown in Fig. 4.

The procedure for requesting non-secure content is shown in Fig. 4. When the user terminal 110 desires to access non-secure content (e.g. by selecting a link to an URL of a non-secure web page to which a secure page points), it sends the request to the proxy server 150 in step 211. The content address (e.g. URL) is verified by the proxy server in step 212 to filter out at the first stage non-trusted content sources. If it is checked in step 213 that the URL is valid (e.g. existent and accessible) and allowable (e.g. not included on non-allowable URL list), then the content is retrieved in step 214 by the proxy server. The obtained content is then verified in step 215 to check whether it complies with content compliance rules 151. If the content is positively verified in step 216, it is sent to the user terminal 217. In case the URL or the content is not valid or not allowable, the proxy server 150 sends to the user terminal 110 an error message, e.g. a HTTP 404 error message, that the content is not accessible.

It can be easily recognized, by one skilled in the art, that the aforementioned system and method for providing a private network can be performed and/or controlled by one or more computer programs. Such computer programs are typically executed by utilizing the computing resources in a computing device such as personal computers, personal digital assistants, cellular telephones, receivers and decoders of digital television or the like. Applications are stored on a non-transitory medium. An example of a non-transitory medium is a non-volatile memory, for example a flash memory or volatile memory, for example RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A system for providing a private network to a user terminal (110), the system comprising:
- the user terminal (110) configured to request content from secure sources (120, 130) compliant with secure content certificates (111) and from a proxy server (150);
- wherein the proxy server (150) is configured to:
- communicate with the user terminal (110) via a secure channel;
- receive from the user terminal (110) a request to access content from an external content server (160);
- retrieve the requested content from the external content server (160);
- verify the compliance of the requested content with predefined content compliance rules (151); and
- provide the requested content to the user terminal (110) if the content is compliant with the predefined content compliance rules (151);
**characterized in that**
- the user terminal (110) further comprises content type access rules (112) defining the types of content which can be accessed directly without the use of the proxy server (150).

2. The system according to claim 1, wherein at least some of the compliance rules (151) are user-terminal (110) specific or user-specific.

3. The system according to any of previous claims, further comprising an internal secured content server (120) which is accessible by the user terminal via a secure channel and which is configured to provide a list of services (121) to the user terminal (110).

4. The system according to any of previous claims, wherein the user terminal (110) comprises secure content certificates for accessing external allowed content servers (140) directly without the use of the proxy server (150).

5. A method for providing a private network to a user terminal (110), comprising the steps of:
- configuring the user terminal (110) to request content from secure sources (120, 130) compliant with secure content certificates (111) and a from proxy server (150);
- providing a secure channel for communication between the user terminal (110) and the proxy server (150);
- at the proxy server (150):
- receiving from the user terminal (110) a request to access content at an external content server (160);
- retrieving the requested content from the external content server (160);
- verifying the compliance of the requested content with predefined content compliance rules (151); and
- providing the requested content to the user terminal (110) if the content is compliant with the predefined content compliance rules (151);
**characterized in that**:
- the user terminal (110) further comprises content type access rules (112) defining the types of content which can be accessed directly without the use of the proxy server (150);
- and the method further comprises configuring the user terminal (110) to request the content of the types defined by the content type access rules (112) directly (209) without the use of the proxy server (150).

6. The method according to claim 5, wherein at least some of the compliance rules (151) are user-terminal (110) specific or user-specific.

7. The method according to any of claims 5-6, further comprising providing an internal secured content server (120) which is accessible by the user terminal via a secure channel and which is configured to provide a list of services (121) to the user terminal (110).

8. The method according to any of claims 5-7, wherein the user terminal (110) comprises secure content certificates for accessing external allowed content servers (140) directly without the use of the proxy server (150).

9. A computer program comprising program code means for performing all the steps of the method according to claim 5 when said program is run on a computer.

10. A computer readable medium storing computer-executable instructions performing all the steps of the method according to claim 5 when executed on a computer.

## Patentansprüche

1. System zum Bereitstellen eines privaten Netzwerks an einem Benutzerterminal (110), wobei das System umfasst:
- das Benutzerterminal (110), welches dazu eingerichtet ist, Content von sicheren Quellen (120,130), welche mit Zertifikaten (111) für sicheren Content konform sind, und von einem Proxy-Server (150) anzufordern;
- wobei der Proxy-Server (150) dazu eingerichtet ist:
- mit dem Benutzerterminal (110) über einen sicheren Kanal zu kommunizieren;
- eine Anforderung von dem Benutzerterminal (110) zu erhalten, um auf Content von einem externen Content-Server(160) zuzugreifen;
- den angeforderten Content von dem externen Content-Server (160) abzurufen;
- die Konformität des angeforderten Contents mit vordefinierten Content-Konformitätsregeln (151) zu verifizieren; und
- den angeforderten Content dem Benutzerterminal (110) bereitzustellen, wenn der Content mit den vordefinierten Content-Konformitätsregeln (151) konform ist;
**dadurch gekennzeichnet, dass**
- das Benutzerterminal (110) ferner Content-Typ-Zugriffsregeln (112) umfasst, welche den Typ des Contents definieren, auf welchen direkt, ohne den Proxy-Server (150) zu benutzen, zugegriffen werden kann.

2. System nach Anspruch 1, wobei wenigstens einige der Konformitätsregeln (151) spezifisch für das Benutzerterminal (110) oder benutzerspezifisch sind.

3. System nach einem der vorherigen Ansprüche, ferner umfassend einen intern gesicherten Content-Server (120), auf welchen das Benutzerterminal über einen sicheren Kanal zugreifen kann, und welcher dazu eingerichtet ist, dem Benutzerterminal (110) eine Serviceliste (121) bereitzustellen.

4. System nach einem der vorherigen Ansprüche, wobei das Benutzerterminal (110) sichere Content-Zertifikate umfasst, um auf externe zugelassene Content-Server (140) direkt, ohne den Proxy-Server (150) zu benutzten, zuzugreifen.

5. Verfahren zum Bereitstellen eines privaten Netzwerks an einem Benutzerterminal (110), umfassend die Schritte:
- Einrichten des Benutzerterminals (110), um einen Content von sicheren Quellen (120,130), welche mit Zertifikaten (111) für sicheren Content konform sind, und von einem Proxy-Server (150) anzufordern;
- Bereitstellen eines sicheren Kanals zum Kommunizieren zwischen dem Benutzerterminal (110) und dem Proxy-Server (150)
- an dem Proxy-Server (150):
- Erhalten einer Anforderung von dem Benutzerterminal (110), um auf Content eines externen Content-Server(160) zuzugreifen;
- Abrufen des angeforderten Contents von dem externen Content-Server (160);
- Verifizieren der Konformität des angeforderten Contents mit vordefinierten Content-Konformitätsregeln (151); und
- Bereitstellen des angeforderten Contents dem Benutzerterminal (110), wenn der Content mit den vordefinierten Content-Konformitätsregeln (151) konform ist;
**dadurch gekennzeichnet, dass**:
- das Benutzerterminal (110) ferner Content-Typ-Zugriffsregeln (112) umfasst, welche den Typ des Contents definieren, auf welchen direkt, ohne den Proxy-Server (150) zu benutzen, zugegriffen werden kann;
- und das Verfahren ferner ein Einrichten des Benutzerterminals (110) umfasst, um den Content der Typen, welche durch die Content-Typ-Zugriffsregeln (112) definiert sind, direkt (209), ohne den Proxy-Server (150) zu benutzen, anzufordern.

6. Verfahren nach Anspruch 5, wobei wenigstens einige der Konformitätsregeln (151) spezifisch für das Benutzerterminal (110) oder benutzerspezifisch sind.

7. Verfahren nach einem der Ansprüche 5 bis 6, ferner umfassend ein Bereitstellen eines intern gesicherten Content-Servers (120), auf welchen das Benutzerterminal über einen sicheren Kanal zugreifen kann, und welcher dazu eingerichtet ist, dem Benutzerterminal (110) eine Serviceliste (121) bereitzustellen.

8. Verfahren nach einem der Ansprüche 5 bis 7, wobei das Benutzerterminal (110) sichere Content-Zertifikate umfasst, um auf externe zugelassene Content-Server (140) direkt, ohne den Proxy-Server (150) zu benutzten, zuzugreifen.

9. Computerprogramm, umfassend Programmcodemittel zum Ausführen aller der Schritte des Verfahrens nach Anspruch 5, wenn das Programm auf einem Computer ausgeführt wird.

10. Computerlesbares Medium welches die Computer-ausführbaren Anweisungen speichert, welche alle die Schritte des Verfahrens nach Anspruch 5 durchführen, wenn diese auf einem Computer ausgeführt werden.

## Revendications

1. Système permettant de fournir un réseau privé à un terminal utilisateur (110), le système comprenant :
- le terminal utilisateur (110) configuré pour demander un contenu à partir de sources sécurisées (120, 130) conformes à des certificats de contenu sécurisé (111) et à partir d'un serveur mandataire (150) ;
- dans lequel le serveur mandataire (150) est configuré pour :
- communiquer avec le terminal utilisateur (110) via un canal sécurisé ;
- recevoir à partir du terminal utilisateur (110) une demande d'accès au contenu à partir d'un serveur de contenu externe (160) ;
- récupérer le contenu demandé à partir du serveur de contenu externe (160) ;
- vérifier la conformité du contenu demandé à des règles de conformité de contenu prédéfinies (151) ; et
- fournir le contenu demandé au terminal utilisateur (110) si le contenu est conforme aux règles de conformité de contenu prédéfinies (151) ;
**caractérisé en ce que**
- le terminal utilisateur (110) comprend en outre des règles d'accès de type de contenu (112) définissant les types de contenu qui sont accessibles directement sans l'utilisation du serveur mandataire (150).

2. Système selon la revendication 1, dans lequel au moins certaines des règles de conformité (151) sont spécifiques du terminal utilisateur (110) ou spécifiques de l'utilisateur.

3. Système selon l'une quelconque des revendications précédentes, comprenant en outre un serveur de contenu sécurisé interne (120) qui est accessible par le terminal utilisateur via un canal sécurisé et qui est configuré pour fournir une liste de services (121) au terminal utilisateur (110).

4. Système selon l'une quelconque des revendications précédentes, dans lequel le terminal utilisateur (110) comprend des certificats de contenu sécurisé pour accéder à des serveurs de contenu autorisé externes (140) directement sans l'utilisation du serveur mandataire (150).

5. Procédé permettant de fournir un réseau privé à un terminal utilisateur (110), comprenant les étapes :
- de configuration du terminal utilisateur (110) pour demander un contenu à partir de sources sécurisées (120, 130) conformes à des certificats de contenu sécurisé (111) et à partir d'un serveur mandataire (150) ;
- de fourniture d'un canal sécurisé pour une communication entre le terminal utilisateur (110) et le serveur mandataire (150) ;
- au niveau du serveur mandataire (150) :
- de réception à partir du terminal utilisateur (110) d'une demande d'accès à un contenu au niveau d'un serveur de contenu externe (160) ;
- de récupération du contenu demandé à partir du serveur de contenu externe (160) ;
- de vérification de la conformité du contenu demandé à des règles de conformité de contenu prédéfinies (151) ; et
- de fourniture du contenu demandé au terminal utilisateur (110) si le contenu est conforme aux règles de conformité de contenu prédéfinies (151) ;
**caractérisé en ce que**
- le terminal utilisateur (110) comprend en outre des règles d'accès de type de contenu (112) définissant les types de contenu qui sont accessibles directement sans l'utilisation du serveur mandataire (150) ;
- et le procédé comprend en outre la configuration du terminal utilisateur (110) pour demander le contenu des types définis par les règles d'accès de type de contenu (112) directement (209) sans l'utilisation du serveur mandataire (150).

6. Procédé selon la revendication 5, dans lequel au moins certaines des règles de conformité (151) sont spécifiques du terminal utilisateur (110) ou spécifiques de l'utilisateur.

7. Procédé selon l'une quelconque des revendications 5 à 6, comprenant en outre la fourniture d'un serveur de contenu sécurisé interne (120) qui est accessible par le terminal utilisateur via un canal sécurisé et qui est configuré pour fournir une liste de services (121) au terminal utilisateur (110).

8. Procédé selon l'une quelconque des revendications 5 à 7, dans lequel le terminal utilisateur (110) comprend des certificats de contenu sécurisé pour accéder à des serveurs de contenu autorisé externes (140) directement sans l'utilisation du serveur mandataire (150).

9. Programme informatique comprenant un moyen de code de programme permettant de réaliser toutes les étapes du procédé selon la revendication 5, lorsque ledit programme est exécuté sur un ordinateur.

10. Support lisible par ordinateur stockant des instructions exécutables par ordinateur réalisant toutes les étapes du procédé selon la revendication 5, lorsqu'elles sont exécutées sur un ordinateur.
